# EUROPEAN PATENT SPECIFICATION

(11) **EP 0 668 476 B1**
(45) Date of publication and mention of the grant of the patent: **11.11.1998**
(21) Application number: 94102306.1
(22) Date of filing: 16.02.1994
(51) Int. Cl.: F25D 23/02, E05D 5/06, B29C 44/12

(54) **Method for incorporating hinges into refrigerators, freezers and the like**
Verfahren zum Einbau von Scharnieren in Kühlschränken, Gefriermöbeln oder dergleichen
Procédé de mise en place de charnières dans des réfrigérateurs, des congélateurs ou analogues

(43) Date of publication of application: 23.08.1995
(73) Proprietor: WHIRLPOOL EUROPE B.V., 5507 SK Veldhoven (NL)
(72) Inventor: Costa, Luigi, c/o WHIRLPOOL ITALIA s.r.l., I-21025 Comerio (VA) (IT); Malnati, Roberto, c/o WHIRLPOOL ITALIA s.r.l., I-21025 Comerio (VA) (IT)
(74) Representative: Guerci, Alessandro

(56) References cited:
- EP-A- 0 306 923
- DE-A- 1 401 602
- DE-A- 1 814 500
- DE-A- 3 340 644
- DE-U- 8 709 699
- GB-A- 851 763
- GB-A- 864 965
- GB-A- 2 149 488
- US-A- 4 864 687

## Description

This invention relates to a method for fixing the hinges to the structure of household electrical appliances such as refrigerator, freezers or the like. The invention also relates to the resultant appliance.

Refrigerators are known to comprise an inner liner prepared by vacuum-forming a sheet of synthetic material to define the refrigerator preservation compartment or compartments, an outer casing, and an insulating layer expanded within the interspace between the liner and casing to form them into a rigid assembly.

A cabinet structure is hence obtained to which the refrigerator closure door or doors are connected by hinges which are fixed to the cabinet by screws. The hinges used differ constructionally according to whether the doors open in a leftward or rightward direction, the hinges being positioned above or below the door. GB-A-0 864 965 indicates a method for incorporating hinges into cold preservation appliances in particular a refrigerator, provided with a face, an inner liner and an outer casing with an expanding insulation mutually rigidifying said parts.

DE-A-1 814500 is showing a method and means for assembling hinges to a body including a prepositioning phase using a spot welding technique followed by fixing rigidifying technique with the use of foaming materials.

GB-A-0 851 763 discloses hinges, within a refrigerator apparatus, which comprise an U-shaped hinge piece made with two parallel arms joined together by a base portion, these arms additionally including coaxial holes for containing related hinge pins. The base portion of the hinge is screwed from the outside of the liner to a corresponding element positioned inside the liner and then the foaming insulating material is cooperatively rigidifying all parts. The drawbacks of this method include: poor door stability combined with the correct alignment simplicity, in the sense that with the passage of time, for screw-fixing solutions, as a result of yielding due to the screw-fixing, the door tends to move within its own plane and lose correct alignment with the structure of the appliance to which it is hinged; a certain additional working time is particularly required for the pre-fixing solutions in the status of the art, which by proper technical considerations should be reduced to a minimum but without undermining the quality of the product; and the impossibility of hinge standardisation, with obvious negative consequences.

An object of the present invention is to provide an improved method which avoids the use of fixing screws while at the same time allowing considerable hinge standardisation and considerably improved door stability and alignment.

A further object of the invention is to provide a household electrical appliance of the aforesaid type in which the relative hinges are securely joined to the appliance structure without the use of screws.

A further object of the invention is to provide specific hinges suitable for the method of the invention.

These and further objects which will be more apparent from the ensuing description are attained by a method, appliance and hinge in accordance with the accompanying claims.

It should be noted that in the present context, for reasons of descriptive simplicity the term "hinge" indicates both the support for the hinge pin alone and the assembly formed by the support, the pin and the means by which the pin is connected to the support.

The invention will be more apparent from the detailed description given hereinafter by way of example with reference to the accompanying drawing, in which:
Figure 1 is a perspective view of a refrigerator inner liner obtained by known vacuum-forming;
Figure 2 is a perspective view of the entire hinge;
Figure 3 is a detailed perspective view of the inner liner and of a decorative metal cover fixable to the hinge;
Figure 4 is a schematic horizontal section showing a hinge cooperating with the cover of the preceding figure and hence positioned between the upper and lower compartment of the liner of Figure 1, after it has been rigidified by the insulating material expanded between the refrigerator inner liner and outer casing;
Figure 5 is a section analogous to that of Figure 4 but taken through an upper or lower hinge;
Figures 6 and 7 are sections through the hinges with their relative pin and its locking spring clip.

In the figures the reference numeral 1 indicates overall a refrigerator inner liner produced in known manner by vacuum-forming a heated sheet of plastics material. In the illustrated example this liner defines two overlying compartments 2, 3 for preserving food at different temperatures.

The liner comprises a surrounding flange 4 (to form the outer face of the appliance) and an intermediate separator portion 5 partially depressed at 8, where it receives a metal cover 6A.

Like depressions 6, 7 (not for receiving covers but only for reasons of coaxiality of the hinges A, Figure 2, as described hereinafter) are provided in the upper and lower horizontal portions of said flange 4.

The liner 1, produced by vacuum-forming, is provided, for example by punching, with groups of apertures in the depressed regions 6, 7, 8 in those positions in which the hinges A of Figure 2 are to be located. Specifically, each group, intended for the mounting of one hinge, comprises two transverse parallel apertures 9 and two smaller vertical apertures 10 positioned between the two preceding apertures.

A hinge A of Figure 2 is mounted in each aperture group. The hinge A comprises a support member 11, for example of pressed sheet metal, hereinafter known as the hinge, which is of U-piece or fork configuration, and hence defined by two parallel arms 12, 13 which taper towards their free end and are each provided with a hole 14, 15 (the two holes are coaxial) and a tab 16, 17 inclined so that the most projecting part 20 faces the rear 19 of the relative arm. The two arms are joined together by the base portion 21 of the U-piece, from which there project two tabs 22, 23 formed by cutting and bending within the portion in question.

The two tabs 22, 23 are positioned at a right angle both to the portion 21 and to the two arms 12, 13, between which they are located.

The portion 21 extends at one end as an extension 24 bent twice at a right angle (as shown in Figure 2).

The hinge 21 is mounted through each group of holes 9, 10 from the rear B of the liner 1 in the direction of the arrow F so that the relative arms 12, 13 pass through the apertures 9 and the tabs 22, 23 pass through the apertures 10, to hence achieve an adequate anti-withdrawal fixing for the hinges 21. The tabs 16, 17 bend during the passage of the arms 12, 13 through the apertures 9, to then rise again after this passage and form a further anti-withdrawal constraint for the hinge.

In addition, the tabs 22, 23 rest against the cover 6A via the holes indicated by 10, to ensure perfect positioning of the holes without undergoing displacement due to the variable thickness of the sheet deriving from the vacuum-forming.

The double right angle appendix 24 rests against the inner liner 1 and against the outer casing (not shown) to provide greater stability to the hinge.

When the hinges 21 have been mounted they appear as in Figure 5, after which the refrigerator inner liner 1 is joined to the outer casing (not shown) in known manner, the assembly obtained then undergoing the conventional step of receiving within the interspace between the liner and casing the reactive mass which then expands therein to form the thermal insulation 30 and not only act as the intermediate means for mutually rigidifying the outer casing and inner liner but also as the means for securely and non-removably fixing the hinges 21 in their mounted positions.

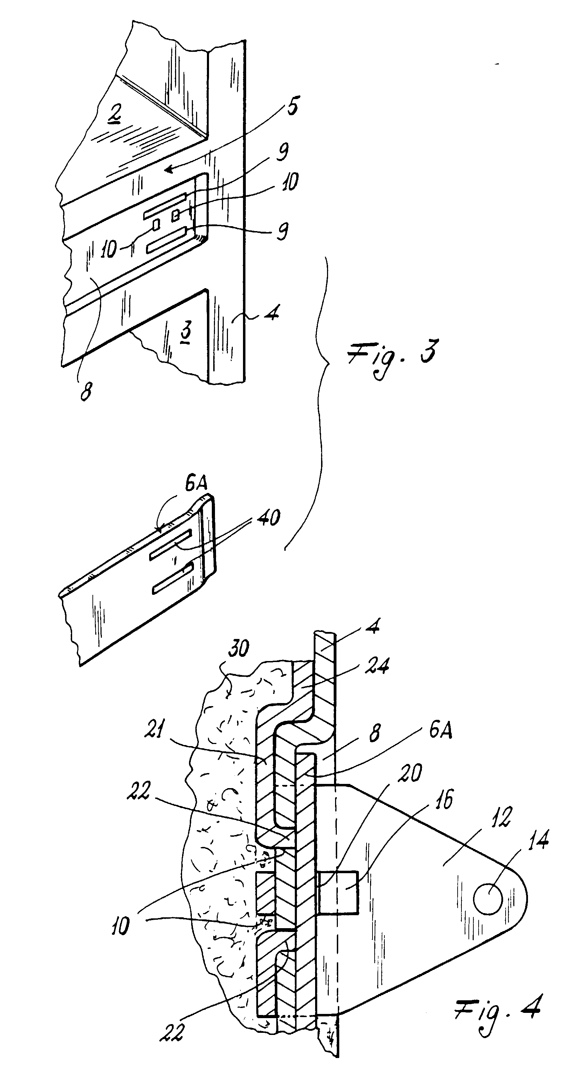

The metal cover 6A (already positioned before the cabinet foaming operation to form the insulation), shown in Figure 3, is now fixed in the intermediate position, ie in the region 8, the cover being provided for this purpose with apertures 40 corresponding to the apertures 9, and through which (see Figure 4) the arms 12, 13 of the hinge 11 are passed together with the relative elastic tabs 16, 17, which are positioned to return to their raised state immediately after passing these apertures so as to bear against the cover 6A and retain it securely in position.

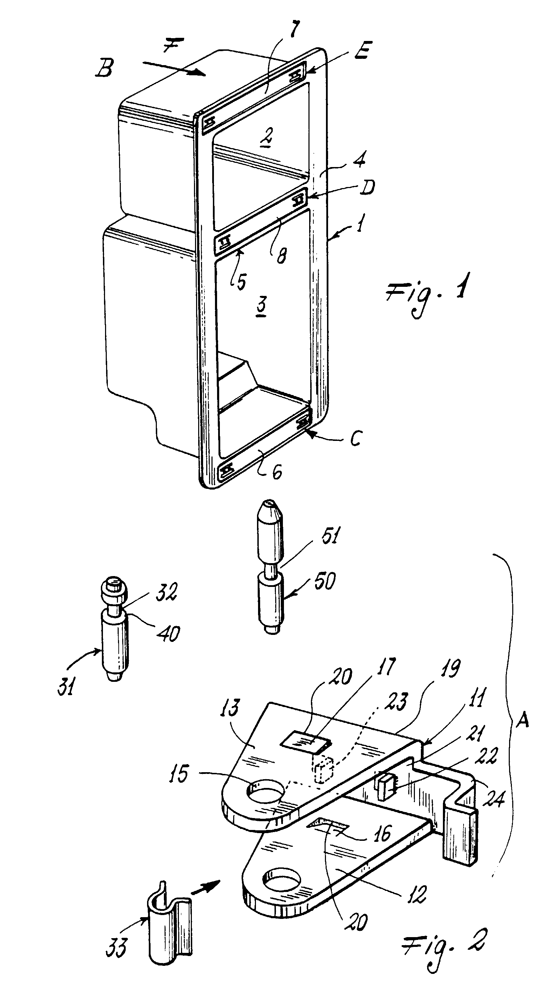

To assemble the refrigerator doors (produced separately and provided with usual holes for receiving the hinge pins) the following procedure is used, on the assumption that the two doors both open by rotation to the right, so that the hinges are applied to positions C, D and E on the right side of Figure 1:
The hinge 21 of position C is firstly used by inserting through the holes 14, 15 and through the corresponding lower hole of the door for the compartment 3 the single-acting pin indicated by 31 in Figure 2, this being inserted from below, inverted with respect to the position shown in Figure 2. To prevent withdrawal of this pin, it is provided with a groove 32 in which is mounted the Ω-shaped spring clip 33 which (Figure 6) by resting about the lower hole 14 and against the upper shoulder 40 A of the groove 32 prevents this withdrawal.

The intermediate hinge (of position D) is then used with a double-acting pin 50 provided with a central groove 51.

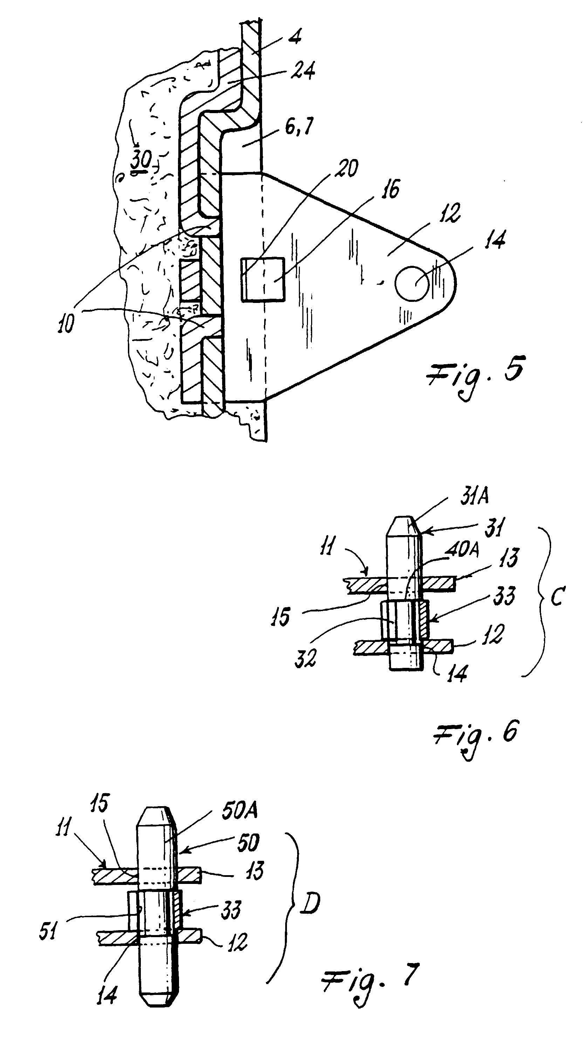

It is inserted from above through the holes 14, 15 of the hinge 11 and into the hole in the underlying door, it also being retained by a clip 33 to achieve the position shown in Figure 7.

The hole in the upper door, not shown, which closes the compartment 2 is now mounted on the upper part 50A of the double-acting pin, after which a single-acting pin 31 is inserted through the hinge of position E and partly into the corresponding hole in the door, after which it is secured by a spring clip 33 to basically achieve the the arrangement of Figure 6 but inverted thereto, ie with the projecting part 31A of the pin directed downwards instead of upwards.

## Claims

1. A method for incorporating hinges into appliances for the cold preservation of products, in particular refrigerators, freezers and the like, provided with a face, an inner liner and an outer casing, with interposed expanded insulation mutually rigidifying said parts, characterized in that before assembling the parts and forming the expanded insulation, two parallel apertures (9) laying transversally to the upward extension of the liner and casing and two vertical apertures (10) positioned between the parallel apertures are formed at those points in which each hinge (11, 31, 33) is to be positioned, from the rear of the face there then being inserted through said two parallel apertures (9) the arms (12, 13) of U-shaped hinges so as to retain them in situ, two tabs (22, 23) extending perpendicular to the arms (12, 13) passing through the vertical apertures (10) to hence achieve an adequate anti-withdrawal fixing for the hinges.

2. A method as claimed in claim 1, characterized in that the arms (12, 13) are provided with flexible tabs (16, 17), such tabs bending during the passage of the arms (12, 13) through the parallel apertures (9), then rising again after this passage and forming a further anti-withdrawal constraint for each hinge.

3. A hinge for appliances for the cold preservation of products, in particular refrigerators, having a U-shaped body (11) with two parallel arms (12, 13) joined together by a base portion (21), said arms comprising coaxial holes (14, 15) for containing hinge pins (31, 50), characterized in that the base portion comprises integral projections (22, 23), both at a right angle to the base portion (21) and to the arms (12, 13), located between the arms (12, 13), and extending in the same direction as the arms.

4. A hinge as claimed in claim 3, characterized in that the arms of the U-shaped hinges comprise flexible tabs (16, 17) which are inclined so that the most projecting part (20) faces the rear (19) of the respective arm.

5. A hinge as claimed in claim 4, characterized by comprising hinge pins (31, 50) provided with grooves (32, 51) into which substantially Ω-shaped spring clips (33) are snap-insertable.

6. An appliance for the cold preservation of products which possesses hinges in accordance with claims 3 to 5.

## Patentansprüche

1. Verfahren zur Anbringung von Scharnieren an Geräten zur Frischhaltung von Produkten, insbesondere an Kühlschränken, Gefrierschränken und dgl., wobei diese Geräte eine Vorderwand, eine Innenauskleidung, ein Außengehäuse und eine zwischen diesen Teilen eingeschäumte Isolierung aufweisen, die diese Teile gegenseitig versteift, **dadurch gekennzeichnet,** daß vor dem Zusammenbau der Teile und dem Einschäumen der Isolierung zwei parallele Schlitze (9), die quer zur Vertikalrichtung der Innenauskleidung und des Außengehäuses liegen, und zwei vertikale Öffnungen (10), die zwischen den parallelen Schlitzen liegen, an solchen Punkten gebildet sind, an denen jeweils ein Scharnier (11, 31, 33) angeordnet werden soll, daß dann die Arme (12, 13) von U-förmigen Scharnieren von der Rückseite der Vorderwand aus durch die beiden Schlitze (9) geführt werden, um die Scharniere dort festzuhalten, und daß dabei zwei senkrecht auf den Armen (12, 13) stehende Lappen (22, 23) durch die vertikalen Öffnungen (10) geführt werden, um damit eine unlösbare Befestigung der Scharniere zu schaffen.

2. Verfahren nach Anspruch 1, dadurch gekennzeichnet, daß die Arme (12, 13) mit federnden Lappen (16, 17) versehen sind und daß diese Lappen während des Durchführens der Arme (12, 13) durch die parallelen Schlitze (9) zurückgebogen werden und danach sich wieder aufrichten, wodurch sie eine weitere Abziehhemmung für jedes Scharnier bilden.

3. Scharnier für Geräte zur Frischhaltung von Produkten, insbesondere für Kühlschränke, mit einem U-förmigen Körper (11) mit zwei parallelen, durch einen Basisteil (21) miteinander verbundenen Armen (12, 13), die koaxiale Löcher (14, 15) zur Aufnahme von Scharnierbolzen aufweisen, **dadurch gekennzeichnet,** daß der Basisteil einstückig mit ihm verbundene Vorsprünge (22, 23) aufweist, die beide senkrecht auf dem Basisteil (21), zu den Armen (12, 13) und zwischen den Armen (12, 13) stehen und in dieselbe Richtung wie diese Arme weisen.

4. Scharnier nach Anspruch 3, dadurch gekennzeichnet, daß die Arme der U-förmigen Schaniere federnde Lappen (16, 17) aufweisen, die so schräg gestellt sind, daß der am weitesten herausragende Teil (20) zur Hinterkante (19) des entsprechenden Arms weist.

5. Scharnier nach Anspruch 4, dadurch gekennzeichnet, daß Scharnierbolzen (31, 50) vorgesehen sind, die mit Nuten (32, 51) versehen sind, in die im wesentlichen omegaförmige Federklemmen (33) einschnappbar sind.

6. Der Frischhaltung von Produkten dienendes Gerät mit Scharnieren gemäß den Ansprüchen 3 bis 5.

## Revendications

1. Procédé d'incorporation de charnières dans des appareils pour la préservation au froid de produits, en particulier des réfrigérateurs, des congélateurs et équivalent, pourvus d'une face, d'une garniture intérieure en d'une enveloppe extérieure, avec une isolation expansée interposée qui rigidifie mutuellement lesdites parties, caractérisé en ce que, avant assemblage des parties et formation de l'isolation expansée, deux ouvertures parallèles (9) s'étendant transversalement à l'extension vers le haut de la garniture et de l'enveloppe et deux ouvertures verticales (10) positionnées entre les ouvertures parallèles sont formées dans les points où chaque charnière (11, 31, 33) doit être positionnée, les bras (12, 13) des charnières en forme de U étant ensuite insérés par l'arrière de la face à travers lesdites ouvertures parallèles (9), de façon à les retenir in situ, deux pattes (22, 23) s'étendant perpendiculairement aux bras (12, 13) et passant à travers les ouvertures verticales (10) afin d'obtenir une fixation anti-retrait correcte des charnières.

2. Procédé selon la revendication 1, caractérisé en ce que les bras (12, 13) sont pourvus de pattes flexibles (16, 17), ces pattes fléchissant pendant le passage des bras (12, 13) à travers les ouvertures parallèles transversales (9) puis se relevant après ce passage et formant une autre retenue anti-retrait pour chaque charnière.

3. Charnière pour appareils pour la conservation au froid de produits, en particulier des réfrigérateurs, ayant un corps en forme de U (11) avec deux bras parallèles (12, 13) reliés par une partie de base (21), lesdits bras comportant des trous coaxiaux (14, 15) destinés à contenir des axes de charnière (31, 50), caractérisée en ce que la partie de base comporte Ceux saillies d'un seul tenant (22, 23), toutes deux à angle droit par rapport à la partie de base (21) et aux bras (12, 13), disposées entre les bras (12, 13), et s'étendant dans la même direction que les bras.

4. Charnière selon la revendication 3, caractérisée en ce que les bras des charnières en forme de U comportent des pattes flexibles (16, 17) qui sont inclinées de sorte que la partie qui dépasse le plus (20) fait face à l'arrière (19) du bras respectif.

5. Charnière selon la revendication 4, caractérisée en ce qu'elle comporte des axes de charnière (31, 50) pourvus de rainures (32, 51) dans lesquelles des agrafes élastiques en forme de Ω (33) peuvent être insérées par encliquetage.

6. Appareil pour la conservation au froid de produits qui possède des charnières selon les revendications 3 à 5.
